# EUROPEAN PATENT SPECIFICATION

(11) **EP 1 791 120 B1**
(45) Date of publication and mention of the grant of the patent: **29.04.2009**
(21) Application number: 06301120.9
(22) Date of filing: 03.11.2006
(51) Int. Cl.: G11B 7/09

(54) **Actuator for a scanning device for scanning optical discs**
Aktuator für eine Abtastvorrichtung zum Abtasten optischer Platten
Actionneur pour un dispositif de balayage pour des disques optiques à balayage

(30) Priority: 25.11.2005 EP 05111327
(43) Date of publication of application: 30.05.2007
(73) Proprietor: THOMSON Licensing S.A., 92100 Boulogne-Billancourt (FR)
(72) Inventor: Suzuki, Tsuneo, 78087 Mönchweiler (DE); Bammert, Michael, 78739 Hardt (DE); Dupper, Rolf, 78050 Villingen-Schwenningen (DE)
(74) Representative: Thies, Stephan

(56) References cited:
- US-A- 4 587 466
- US-A- 5 046 820
- US-A- 5 600 619
- US-A- 5 666 235
- US-A1- 2001 026 406

## Description

The invention relates to an actuator for a scanning device for scanning optical discs, particularly for a device for recording and/or reproducing information.

An actuator integrated in a scanning device is used for the emission of a laser beam onto an optical disc constructed as information medium and for receiving the beam reflected from the disc. For this purpose, the actuator has a focus lens and is attached adjustably with a support to an optical housing, also known as pickup, which can be moved on guide rods in order to be able to align the focus lens in accordance with the optical path of the housing. This housing, and thus the entire scanning device, can be moved at high speed and positioning accuracy by electric motor and ensures short access times to different locations on the information medium. In this arrangement, the scanning device focuses a beam of radiation for forming a radiation point on a track to be scanned on the information medium. This radiation point follows the track of the rotating information medium during recording or production. This is done with the aid of a track control system which provides for coarse control of the carriage-like housing and of the actuator in a radial direction of the disc and a fine control of the actuator. The actuator is preferably attached with a support plate at the optical housing and has a lens holder for the focus lens, a damper base, rigidly connected to the support plate, and focus and track guidance coils, the lens holder being connected elastically resiliently to the damper base with the aid of elastically flexible suspension means, particularly also wires.

As disclosed in EP 1 394 783 A2, the actuator is usually constructed symmetrically in the direction of movement of the optical housing. In this arrangement, the lens holder is arranged on the side facing away from the damper base of a coil arrangement comprising the focus and track guidance coils and tilt coils and positioned between magnets, the centre of which preferably lies at the centre of gravity of the actuator, wherein elastically flexible suspension wires for the lens holder are arranged on both sides of the longitudinal axis determined by the lens holder and the damper base, which longitudinal axis is at the same time the axis of symmetry. The lens holder is thus located at the front end of the actuator and is moved orthogonal to the longitudinal axis in a radial direction with respect to the optical disc towards the latter and away from the latter.

In EP 0 618 570 B1, an arrangement is described in which an actuator basically constructed in the same manner is moved with the optical housing transversely with respect to its longitudinal axis and at the same time also radially with respect to the optical disc.

In these lens holder arrangements in the centre of the actuator, it is considered to be disadvantageous that the actuator and particularly the lens cannot be moved close enough to the centre of the respective optical disc which is absolutely necessary for scanning small discs, for example coin-sized discs having a diameter of the order of magnitude of 30 mm.

The two documents cited above are considered to represent the closest prior art.

It is the object of the invention to construct an actuator in such a manner that it is also suitable for small optical discs.

According to the invention, this object is achieved as defined in claim 1. The focus lens can be arranged, in radial direction towards the disc, between the junction of the suspension means and the lens holder on one hand, and the centre of the disc on the other hand. Advantageous embodiments are listed in the subclaims.

The invention consists in the fact that in an actuator for a device for scanning optical discs with a lens holder, connected on both sides of its longitudinal axis with elastically flexible suspension means to a damper base, the lens held in the lens holder is arranged, in radial direction, between the junction of the suspension means and the lens holder on one hand, and the centre of the disc on the other hand. This asymmetric arrangement of the focus lens outside the actuator suspension makes it possible to move the focus lens very close to the centre even of a small optical disc so that even the inner area of the information track of this disc can be scanned with the focussed laser beam.

In order that the centre of gravity of the actuator still coincides with the centre of the coil and magnet arrangement and at the same time on its longitudinal axis in order to facilitate a fine adjustment of the focus lens, the lens holder with the focus lens is arranged at a lateral distance from the centre given on the longitudinal axis and is connected to a balance weight on the other side of the longitudinal axis and of the centre.

In this arrangement, it is suitable to arrange the lens holder and the balance weight on a frame enclosing the coil and magnet arrangement and to implement them as an integral component with the frame. This reduces the variety of components and lowers assembly costs. The elastic suspension means, particularly wires, for the lens holder can be connected to this frame.

The actuator is preferably arranged on the optical housing of the scanning device in such a manner that the scanning device is moved radially with respect to the optical disc and transversely with respect to the longitudinal axis of the actuator.

In the text which follows the invention will be explained with reference to an illustrative embodiment. In the associated drawings,
- Figure 1: shows a top view of an actuator according to the invention,
- Figure 2: shows a perspective representation of the actuator of Figure 1, and
- Figure 3: shows a further perspective representation of the actuator of Figure 1.

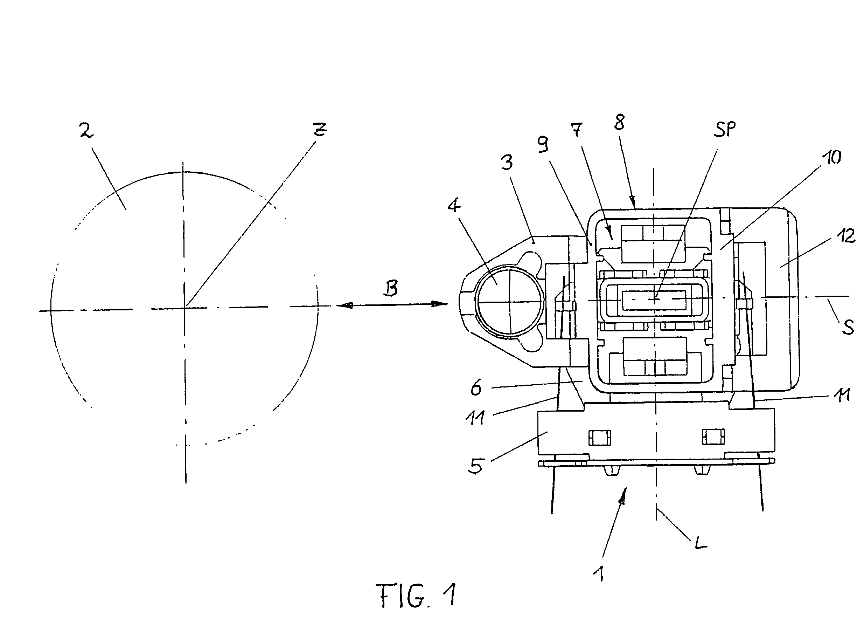

The actuator 1, shown in Figure 1, as component of a scanning device, not shown in greater detail, for scanning an optical disc 2, has a focus lens 4 held in a lens holder 3 and a damper base 5. The damper base 5 is provided with a support plate 6 for arranging the actuator 1 on the optical housing of the scanning device which carries on the side facing away from the optical housing magnets 7 of a coil and magnet arrangement in a known manner, which also comprises focus, track guidance and tilt coils in order to perform fine positioning of the focus lens 4. This coil and magnet arrangement is enclosed by a frame 8 arranged symmetrically with respect to the arrangement, which frame is connected at the outside of each of its two side walls 9 and 10, extending in parallel with the centrally arranged longitudinal axis L of the actuator 1, with two elastically flexible suspension wires 11 each, to the damper base 5.

On the outside of the disc-facing side wall 9 of the frame 8, the lens holder 3 is moulded on in one piece, and on the outside of its side wall 10 facing away from the disc 2, a balance weight 12 is moulded on in one piece; they are each constructed symmetrically with respect to an axis of symmetry S extending transversely to the longitudinal axis L. The axis of symmetry S intersects the longitudinal axis L of the actuator 1 in its centre point of mass or centre of gravity SP. The lens holder 3 with the focus lens 4 is arranged on the side facing the receptacle device for the disc 2 and thus on the disc side at the actuator 1 and is being moved, for positioning over or at a vertical distance from the information track, along the axis of symmetry S and thus transversely to the longitudinal axis L in the radial direction towards the disc 2 and correspondingly also away from it (direction arrow B).

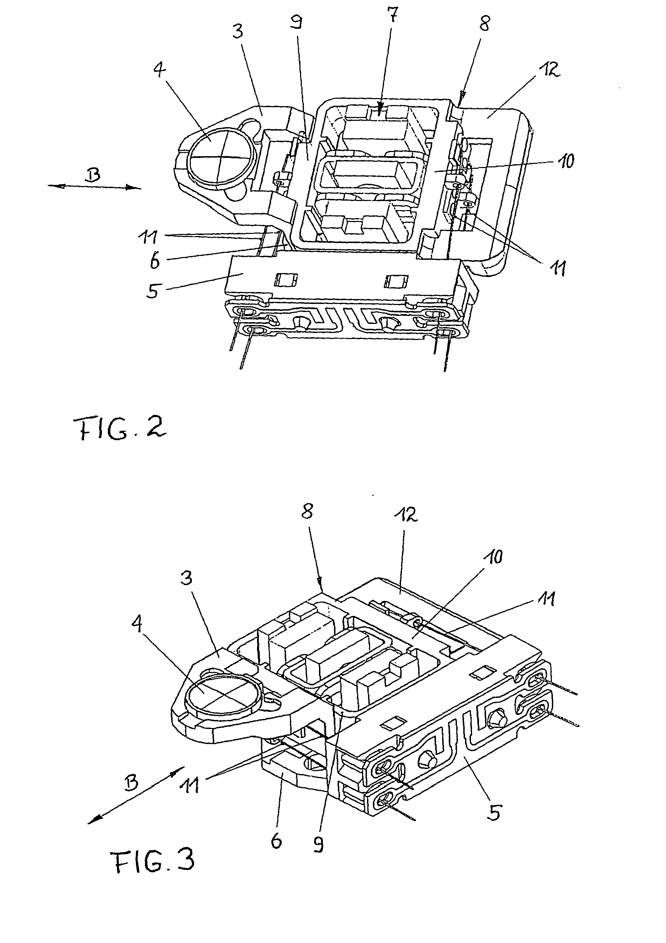

In Figures 2 and 3, the actuator 1 is shown in two perspective representations. These are intended to illustrate its configuration and the arrangement of the focus lens 4 and of the balance weight 12. Figure 2, in particular, shows that the balance weight 12 protrudes between the two suspension wires 11 engaging the frame 8 on the side of the balance weight. The lens holder 3, on the other hand, protrudes perpendicularly to the support plate 6 over the disc facing side wall 9 and, above the disc facing side wall 9 and the suspension wires 11, is angled away towards the outside in parallel with the support plate 6. The focus lens 4 thus protrudes from the actuator 1, both in the direction towards the center of the disc 2 to be scanned as well as towards the top with respect to the coil and magnet arrangement, and cannot be impeded by the remaining components of the actuator 1 during the positioning above the information track near the centre Z of the disc 2.

An illustrative embodiment alternative to the arrangement of the actuator 1 with the frame 8 and the side walls 9, 10 shown in Figures 1 to 3, consists in that a centre part of the actuator 1 exclusively consists of a printed circuit board arranged in parallel with the coils of the coil and magnet arrangement, and the lens holder 3 and the balance weight 12 are attached to opposite ends of this circuit board. Such an arrangement advantageously has a reduced weight and thus a reduced moment of inertia.

## Claims

1. Actuator (1) for a scanning device for scanning optical discs (2), with a focus lens (4) fixed in a lens holder (3), with a damper base (5) permanently connected to a support (6), and with a coil and magnet arrangement for fine positioning of the focus lens (4) , the magnets (7) of the arrangement being arranged on the support (6) and the coils being attached to the lens holder (3); wherein the lens holder (3) is connected to the damper base (5) via elastically flexible suspension means (11) extending transversally to the focussing direction of the lens (4) and arranged on both sides of the coil and magnet arrangement, **characterized in that** in the direction perpendicular to the focussing direction the connection of one of the suspension means (11) to the lens holder (3) is arranged between the focus lens (4) and the connection of the other one of the suspension means (11) to the lens holder (3).

2. Actuator according to Claim 1, **characterized in that** the lens holder (3) is arranged at a lateral distance from the centre of gravity (SP) of the actuator (1).

3. Actuator according to Claim 1 or 2, **characterized in that** a balance weight (12) is connected to the lens holder (3) on the side opposite to the focus lens (4).

4. Actuator according to Claim 3, **characterized in that** the lens holder (3) and the balance weight (12) are arranged on a frame (8) enclosing the coil and magnet arrangement.

5. Actuator according to Claim 4, **characterized in that** the lens holder (3), the balance weight (12) and the frame (8) are together constructed in one piece.

6. Actuator according to Claim 4 or 5, **characterized in that** the frame (8) is connected to the suspension means (11) for the lens holder (3).

7. Actuator according to one of the preceding claims, **characterized in that** the actuator (1) forms, together with an optical housing, a scanning device which is moved in the direction of movement (B).

8. Device for reading and/or writing optical storage media, **characterized in that** it has an actuator according to one of the preceding claims and a scanning device formed by means of the latter.

## Patentansprüche

1. Aktuator (1) für eine Abtasteinrichtung zur Abtastung optischer Platten (2), mit einer in einem Linsenhalter (3) festgelegten Fokuslinse (4), mit einer mit einem Träger (6) fest verbundenen Dämpferbasis (5), und mit einer Spulen- und Magnetanordnung für eine Feinpositionierung der Fokuslinse (4), wobei die Magnete (7) der Anordnung an dem Träger (6) angeordnet und die Spulen an dem Linsenhalter (3) angebracht sind, wobei der Linsenhalter (3) über quer zur Fokussierrichtung der Linse (4) verlaufende und auf beiden Seiten der Spulen- und Magnetanordnung angeordnete elastisch biegsame Aufhängemittel (11) mit der Dämpferbasis (5) verbunden ist, **dadurch gekennzeichnet, dass** in der senkrecht zur Fokussierrichtung verlaufenden Richtung die Verbindung eines der Aufhängemittel (11) mit dem Linsenhalter (3) zwischen der Fokuslinse (4) und der Verbindung des anderen Aufhängemittels (11) mit dem Linsenhalter (3) angeordnet ist.

2. Aktuator nach Anspruch 1, **dadurch gekennzeichnet, dass** der Linsenhalter (3) im seitlichen Abstand von dem Schwerpunkt (SP) des Aktuators (1) angeordnet ist.

3. Aktuator nach Anspruch 1 oder 2, **dadurch gekennzeichnet, dass** auf der der Fokuslinse (4) gegenüberliegenden Seite eine Ausgleichsmasse (12) mit dem Linsenhalter (3) verbunden ist.

4. Aktuator nach Anspruch 3, **dadurch gekennzeichnet, dass** der Linsenhalter (3) und die Ausgleichsmasse (12) an einem die Spulen- und Magnetanordnung umschließenden Rahmen (8) angeordnet sind.

5. Aktuator nach Anspruch 4, **dadurch gekennzeichnet, dass** der Linsenhalter (3), die Ausgleichsmasse (12) und der Rahmen (8) zusammen in einem Stück ausgebildet sind.

6. Aktuator nach Anspruch 4 oder 5, **dadurch gekennzeichnet, dass** der Rahmen (8) mit den Aufhängemitteln (11) für den Linsenhalter (3) verbunden ist.

7. Aktuator nach einem der vorhergehenden Ansprüche, **dadurch gekennzeichnet, dass** der Aktuator (1) zusammen mit einem optischen Gehäuse eine Abtasteinrichtung bildet, die in Bewegungsrichtung (B) bewegt wird.

8. Gerät zum Lesen und/oder Beschreiben optischer Speichermedien, **dadurch gekennzeichnet, dass** es einen Aktuator nach einem der vorhergehenden Ansprüche und eine mit diesem gebildete Abtasteinrichtung aufweist.

## Revendications

1. Actionneur (1) pour dispositif de balayage destiné à balayer des disques optiques (2), comportant une lentille de focalisation (4) maintenue dans un support de lentille (3), une base d'amortissement (5) reliée en permanence à un support (6), et une configuration de bobines et d'aimants pour un positionnement précis de la lentille de focalisation (4), les aimants (7) de la configuration étant placés sur le support (6) et les bobines étant fixées au support de lentille (3), dans lequel le support de lentille (3) est relié à la base d'amortissement (5) par l'intermédiaire de moyens de suspension élastiques et flexibles (11) qui s'étendent transversalement par rapport à la direction de focalisation de la lentille (4) et sont placés des deux côtés de la configuration de bobines et d'aimants, **caractérisé en ce que** dans la direction perpendiculaire à la direction de focalisation le point de fixation de l'un des moyens de suspension (11) au support de lentille (3) se trouve entre la lentille de focalisation (4) et le point de fixation de l'autre moyen de suspension (11) au support de lentille (3).

2. Actionneur selon la revendication 1, **caractérisé en ce que** le support de lentille (3) est placé à une certaine distance latérale du centre de gravité (SP) de l'actionneur (1).

3. Actionneur selon la revendication 1 ou 2, **caractérisé en ce que** un contrepoids (12) est relié au support de lentille (3) du côté opposé à la lentille de focalisation (4).

4. Actionneur selon la revendication 3, **caractérisé en ce que** le support de lentille (3) et le contrepoids (12) sont placés sur un cadre (8) qui entoure la configuration de bobines et d'aimants.

5. Actionneur selon la revendication 4, **caractérisé en ce que** le support de lentille (3), le contrepoids (12) et le cadre (8) font partie intégrante d'une même pièce.

6. Actionneur selon la revendication 4 ou 5, **caractérisé en ce que** le cadre (8) est relié aux moyens de suspension (11) du support de lentille (3).

7. Actionneur selon l'une des revendications précédentes, **caractérisé en ce que** ce dernier (1) constitue avec un boîtier optique, un dispositif de balayage qui se déplace dans le sens du mouvement (B).

8. Dispositif de lecture et/ou d'écriture sur des supports optiques de mémoire, **caractérisé en ce qu'**il comporte un actionneur conforme à l'une des revendications précédentes et un dispositif de balayage constitué à l'aide de ce dernier.
